# FASCICULE DE BREVET EUROPEEN

(11) **EP 0 614 343 B1**
(45) Date de publication et mention de la délivrance du brevet: **23.07.1997**
(21) Numéro de dépôt: 93910093.9
(22) Date de dépôt: 07.05.1993
(51) Int. Cl.: A61C 7/00

(54) **APPAREIL DE REHABILIATION DES FONCTIONS LABIOLINGUALES BASE SUR LA RECHERCHE D'UNE SATISFACTION**
REHABILITIERUNGSVORRICHTUNG FÜR DIE LABIOLINGUALEN FUNKTIONEN
REWARD-BASED APPARATUS FOR THE REHABILITATION OF LABIOLINGUAL FUNCTIONS

(30) Priorité: 07.05.1992 FR 9205841
(43) Date de publication de la demande: 14.09.1994
(73) Titulaire: STRAZIELLE, Catherine Geneviève, F-54000 Nancy (FR); ALARD, Roland, F-54510 Tomblaine (FR)
(72) Inventeur: STRAZIELLE, Catherine Geneviève, F-54000 Nancy (FR); ALARD, Roland, F-54510 Tomblaine (FR)
(74) Mandataire: Poupon, Michel
(86) Numéro de dépôt international: FR9300440
(87) Numéro de publication internationale: WO9321852

(56) Documents cités:
- FR-A- 2 368 932
- US-A- 3 434 210
- US-A- 5 064 370

## Description

La présente invention concerne un appareil endobuccal de réhabilitation fonctionnelle utilisé chez les sujets atteints de dysfonctions labio-linguales.

Dans tous les troubles fonctionnels de la sphère orofaciale (de la phonation, de la déglutition, de la respiration, de l'ingestion alimentaire...), il est nécessaire de réhabiliter les fonctions.

Dans la correction des dysmorphoses maxillo-faciales associées à des dysfonctions labio-linguales, il est impératif de procéder à une rééducation fonctionnelle des masses musculaires orales et périorales.

Cet appareil est destiné :
- à substituer tous les types d'appareils à vocation punitive jusqu'alors utilisés,
- à remplacer ou renforcer par une action permanente et inconsciente, les techniques de myothérapie fonctionnelle.

Le principe de rééducation à l'origine de cet appareil s'appuie sur l'importance du rôle de la récompense et de la recherche de la satisfaction dans la mémorisation et l'apprentissage fonctionnels.

Cet appareil est muni d'un dispositif de fixation qui permet de placer des éléments stimulateurs divers aux endroits précis de la cavité buccale qui doivent être normalement stimulés dans les diverses fonctions oro-faciales, tant au niveau du maxillaire supérieur qu'au niveau de la mandibule.

Ce système d'attache permet une fixation sûre, rapide et facile des éléments stimulateurs.

Ces éléments stimulateurs permettent :
- une stimulation permanente de la zone structurale tissulaire impliquée dans la fonction ; le port de l'appareil étant continuel.
- le maintien d'un "signal signifiant" nécessaire à la mémorisation d'un apprentissage. La variabilité dans les sensations éprouvées permet l'évitement de l'habituation du mouvement.
- la musculation des masses musculaires orales par l'exercice.
- le renforcement de la mémorisation et de l'engrammation cérébrale des fonctions rééduquées, par l'activation des circuits de récompense liés à la satisfaction.
- de plus, le dispositif actif peut-être placé sur des appareils correctifs des dysmorphoses maxillo-faciales associées.

La réalisation de l'appareil se fait dans les laboratoires de prothèse dentaire à partir des moulages issus d'empreintes des bases maxillo-dentaires supérieur et inférieur du sujet impliqué.

L'appareil est constitué d'une plaque-support amovible, munie de crochets d'ancrage dentaire et d'un arc vestibulaire antérieur (neutre ou actif).

Le dispositif actif de fixation a la forme d'une attache qui sert d'artifice pour fixer les éléments stimulateurs variés et à composante physiologique satisfaisante (tubes, billes, bonbons, cupules...).

Ce système d'attache est formé de deux bras (dont l'un est libre, mobile) munis de deux ressorts en spirale. Ceux-ci contribuent à donner une certaine élasticité au fil utilisé. Le ressort postérieur permet le blocage du bras libre de l'attache en position de fermeture. Le ressort antérieur donne l'amplitude d'ouverture de l'attache, nécessaire pour placer les éléments stimulateurs.

Ce système d'attache est réalisé dans l'intrados de l'appareil pour deux raisons :
- la sécurité totale, l'attache ne pouvant être ouverte qu'après avoir retiré l'appareil de la bouche.
- le dispositif n'interfère pas dans la prise de conscience des sensations orales présentes dans chaque fonction.

Les dessins annexés illustrent l'invention :

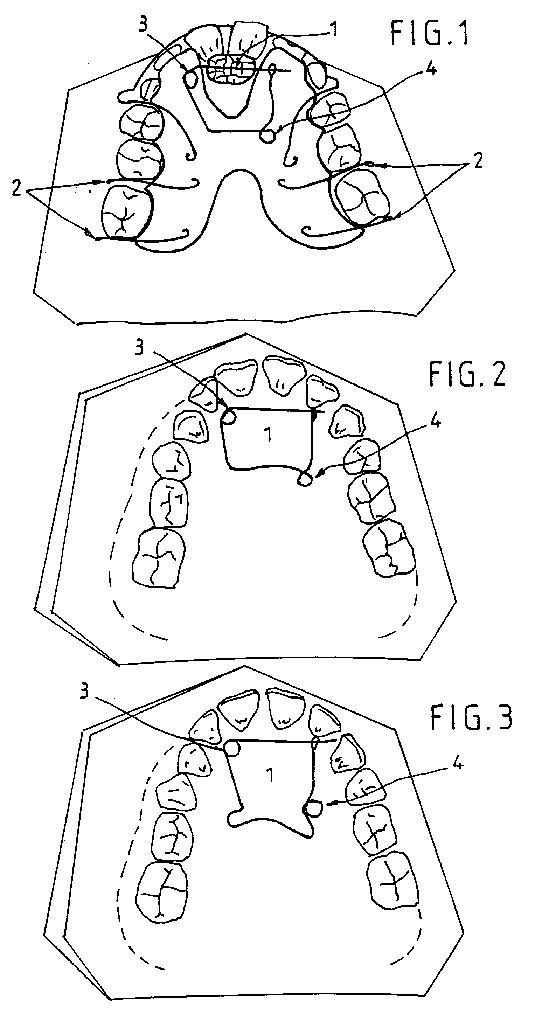

La figure 1 présente l'appareil en place sur un modèle standard. Il s'agit d'un modèle particulier de réalisation pour la rééducation de la fonction de déglutition.
   Le dispositif actif (1) est placé en retrait des incisives, perpendiculaire au raphé médian, sa partie antérieure étant surélevée des papilles par deux enroulements ressorts.
   A titre indicatif mais non limitatif, la plaque est effectuée en résine saupoudrée et monomère et les crochets (2) sont de type "éperon" permettant ainsi un réglage en "pince" assurant ainsi une bonne tenue postérieure de l'appareil. L'appareil est présenté ici, à titre d'exemple, avec comme élément stimulateur une bille ovalaire granuleuse.
   Le type de crochet utilisé, le matériau et les limites de la plaque-support ne sont pas les éléments actifs de la technique rééducative. Par conséquent, la fabrication de ces supports ne nécessite pas de restriction tant au niveau du choix du matériau, des formes, et des limites. Ces éléments sont à apprécier individuellement en fonction des moulages dont on dispose.
   Aucune dimension n'est mentionnée. Elles sont individuelles et à apprécier sur les moulages dentaires.
La figure 2 représente le dispositif d'attache muni des deux ressorts antérieur (3) et postérieur (4). (vue supérieure).
La figure 3 représente une variante du dispositif actif utilisé pour les appareils présentant un vérin d'expansion transversale. Cette attache est modifiée dans sa partie postérieure par deux arrondis de maintien qui sont inclus dans le matériau de la plaque-support puisqu'il faut, dans un second temps, scier ce fil postérieur pour ouvrir le vérin d'expansion.

A titre d'exemple non limitatif ce dispositif est fabriqué avec un fil d'acier de 7/10 mm.

Cet appareil utilisé dans la réhabilitation des fonctions oro-faciales est destiné à un but thérapeutique. Son support est à réaliser individuellement sur les moulages tirés à partir des empreintes personnelles des sujets. Seul le système d'attache peut être fabriqué en série selon des modèles standardisés préétablis.

## Revendications

1. Appareil endobuccal utilisable pour une méthode de réhabilitation des fonctions labiolinguales, basée sur la satisfaction, caractérisé en ce qu'il comporte un dispositif de fixation d'éléments de stimulation, ayant la forme d'un système d'attache muni de deux ressorts en spirale, l'un antérieur (3) servant à l'amplitude de mobilité du bras actif de celui-ci et à la surélévation du dispositif par rapport aux tissus osseux et aux muqueuses en rapport, et l'autre postérieur (4) servant de fermeture de sécurité.

2. Dispositif de fixation selon la revendication 1 caractérisé en ce qu'il est situé dans l'intrados de l'appareil.

3. Dispositif de fixation selon l'une des revendications précédentes caractérisé en ce qu'il est monté sur une plaque support dont le matériau est choisi dans le groupe résines, métaux précieux ou semi-précieux.

4. Dispositif de fixation selon l'une des revendications précédentes caractérisé en ce qu'il comporte en outre des crochets d'ancrage dentaire (2).

## Claims

1. Endobuccal apparatus utilisable for a method of rehabilitating labiolingual functions, such method being based on satisfaction, characterised in that it comprises a device for securing stimulating elements, having the form of an attachment system provided with two helical springs, the front spring (3) serving to amplify the mobility of the active arm of the latter and to raise the device relative to the bony tissues and related mucous membranes, and the rear spring (4) serving as a safety lock.

2. Securing device according to claim 1, characterised in that it is situated in the intrados of the apparatus.

3. Securing device according to one of the preceding claims, characterised in that it is mounted on a support plate, the material of which is selected from the group (resins, precious metals or semi-precious metals).

4. Securing device according to one of the preceding claims, characterised in that it also comprises dental anchoring hooks (2).

## Patentansprüche

1. Endobukkale Vorrichtung für die auf Befriedigung gestützte Rehabilitation labiolingualer Funktionen, **dadurch gekennzeichnet**, dass sie eine Befestigungsvorrichtung für Stimulationselemente aufweist, welche die Form eines Klemmsystems hat, welches mit zwei Federn mit einer Wendel versehen ist, von denen die vordere Wendel (3) zur Amplitudenbeweglichkeit ihres aktiven Schenkels und zur Überhöhung der Vorrichtung in Bezug auf das jeweilige Knochengewebe und die Schleimhäute dient und die andere hintere (4) als Sicherheitsverschluss ausgebildet ist.

2. Befestigungsvorrichtung nach Anspruch 1, **dadurch gekennzeichnet**, dass sie im Innengewölbe der Vorrichtung angeordnet ist.

3. Befestigungsvorrichtung nach einem der vorangehenden Ansprüche, **dadurch gekennzeichnet**, dass sie auf einer Stützplatte befestigt ist, deren Werkstoff aus dem Bereich der Harze, Edelmetalle oder Halbedelmetalle ausgewählt wurde.

4. Befestigungsvorrichtung nach einem der vorangehenden Ansprüche, **dadurch gekennzeichnet**, dass sie desweiteren dentale Verankerungsklammern aufweist.
